# EUROPÄISCHE PATENTANMELDUNG

(11) **EP 0 756 160 A1**
(43) Veröffentlichungstag der Anmeldung: **29.01.1997**
(21) Anmeldenummer: 96108204.7
(22) Anmeldetag: 23.05.1996
(51) Int. Cl.: G01K 7/08

(54) **Temperaturmesseinrichtung**

(30) Priorität: 25.07.1995 DE 19526975
(71) Anmelder: Heraeus Sensor GmbH, D-63450 Hanau (DE)
(72) Erfinder: Schlag, Frank, 21073 Hamburg (DE); Den Ouden, Arie Cornelis, 2215 GE Voorhout (NL)
(74) Vertreter: Kühn, Hans-Christian

(57) **Zusammenfassung**

Zur Temperaturmessung nach dem thermoelektrischen Prinzip ist ein Trägerkörper (4) vorgesehen, der aus dem Thermomaterial des negativen Partners eines Thermopaars besteht, wobei an einer oder mehreren Meßstellen (1, 2, 3) auf dem Trägerkörper (4) Thermoelemente durch elektrische Verbindung mit einem Leiter aus dem Werkstoff des positiven Partners des Thermopaars gebildet werden; es handelt sich um einen verhältnismäßig einfachen Aufbau, da nur eine Thermoelementleitung des positiven Partners pro Meßstelle erforderlich ist, wobei Trägerkörper (4) und negative Signalleitung (15) aus dem gleichen Werkstoff bestehen.

Als besonders zweckmäßig erweist sich die Anordnung mehrerer Thermopaare in Strömungsrichtung (11) eines den Trägerkörper (4) durchströmenden Mediums, um eine Temperaturgradientenbildung zu ermitteln; andererseits ist es jedoch auch möglich, die Thermoelemente im Querschnitt zur Strömungsrichtung, das heißt in radialer Richtung, einzusetzen und den Mittelwert eines strömenden oder auch nicht bewegten Mediums innerhalb des Trägerkörpers zu ermitteln.

## Beschreibung

Die Erfindung betrifft eine Temperaturmeßeinrichtung nach dem thermoelektrischen Prinzip, wobei wenigstens ein Kontaktträger mit einem ersten Leitungsanschluß auf einem als Meßobjekt dienenden Trägerkörper angeordnet ist.

Aus der DE-OS 21 56 833 ist eine auf dem thermoelektrischen Prinzip beruhende Temperatur-Meßeinrichtung für konduktive Erwärmungsanlagen bekannt, bei der wenigstens zwei leitende mit elastischen Borsten versehene Kontaktträger aus zwei verschiedenen Thermospannungsmetallen auf ein Meßobjekt aufgesetzt werden, das beispielsweise als in eine Schmelze tauchender Stab ausgebildet ist; die beiden Kontaktträger sind mit elektrischen Leitungsanschlüssen zum Abgriff der Thermospannung zwischen den Kontaktträgern versehen, wobei die Messung nach dem für die Volta'sche Kontaktspannungsreihe geltenden Meßverfahren durchgeführt wird; die Borsten, welche als elastische dünne Drähte ausgebildet sind, können aus Chrom, Chrom-Nickel, Kupfer-Konstantan oder ähnlichen Thermospannungsmetallen bestehen.

Weiterhin ist aus der DE 28 07 794 A1 eine Anordnung von Thermoelementen bekannt, die bei einer räumlichen Verteilung der Temperaturen, beispielsweise im Inneren eines Motorgehäuses die Bildung von Temperaturmittelwerten ermöglicht, wobei eine Kompensation von Mittelungsfehlern parallel geschalteter Thermoelemente durch unterschiedliche Querschnitte der Zuleitungsdrähte ausgeglichen wird.

Aufgrund einer Vielzahl von einzelnen Thermoelementen handelt es sich hierbei um eine verhältnismäßig aufwendige Anordnung.

Aufgabe der Erfindung ist es, eine preiswerte, robuste Ausführung zur Mittelwertbestimmung einer mittleren Abgastemperatur mit mehreren Thermoelementen vorzusehen; darüberhinaus soll auch die Ausgabe von Meßwerten einzelner Thermoelemente möglich sein. Eine solche Meßeinrichtung soll beispielsweise in Haushaltsbrennern oder als Bauteilschutz für Brenner-Katalysatoren einsetzbar sein.

Die Aufgabe wird durch die kennzeichnenden Merkmale des Anspruchs 1 gelöst.

Als vorteilhaft erweist sich neben der verhältnismäßig einfachen Herstellung die erhöhte Zuverlässigkeit aufgrund einer einfachen, robusten Bauweise, sowie die relativ geringe Wartungs-, bzw. Reparaturanfälligkeit.

In einer bevorzugten Ausführungsform wird ein Trägerkörper aus dem Thermomaterial des negativen Partners von einem Thermopaar wie beispielsweise NiCr - Ni (Typ K gemäß Norm IEC 584) oder NiCrSi - NiSi (Typ N gemäß Norm IEC 584) hergestellt. An beliebig vielen Stellen können Thermopaare durch Anschweißen eines positiven Schenkels des Thermopaares hergestellt werden; es ist nur eine Thermoelementleitung des positiven Partners pro Meßstelle erforderlich, da die negative Signalleitung durch den Trägerkörper gebildet ist.

In einer bevorzugten Ausführungsform sind mehrere Verbindungsstellen zur Bildung eines Mittelwertes zueinander parallel geschaltet, wobei der Trägerkörper als negativer Partner der jeweiligen Thermopaare mit einem eigenen Anschluß zu einer Meßeinrichtung verbunden ist; Trägerkörper und negative Signalleitung bestehen aus dem gleichen Werkstoff; als vorteilhaft erweist sich dabei der verhältnismäßig einfache konstruktive Aufbau.

Weitere bevorzugte Ausgestaltungen der Erfindung sind in den Ansprüchen 2 bis 10 angegeben.

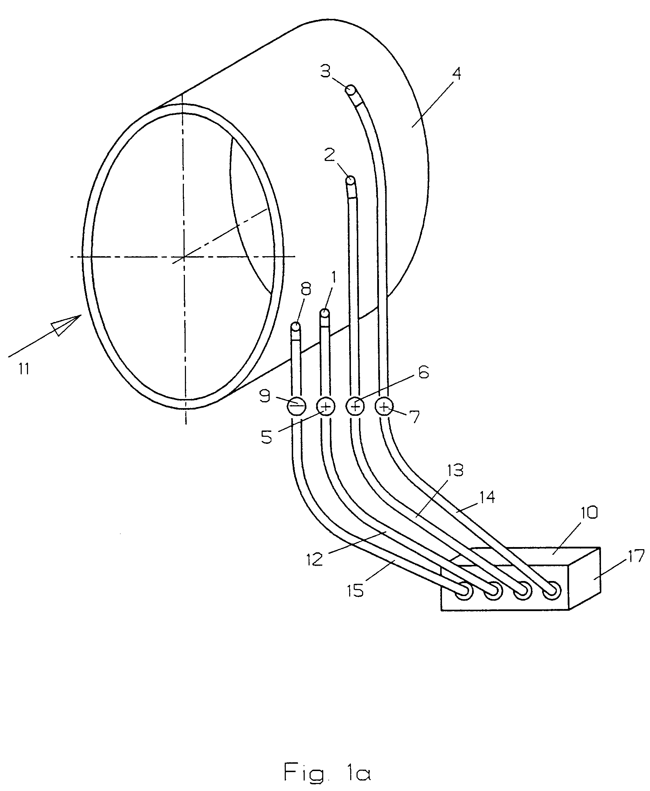

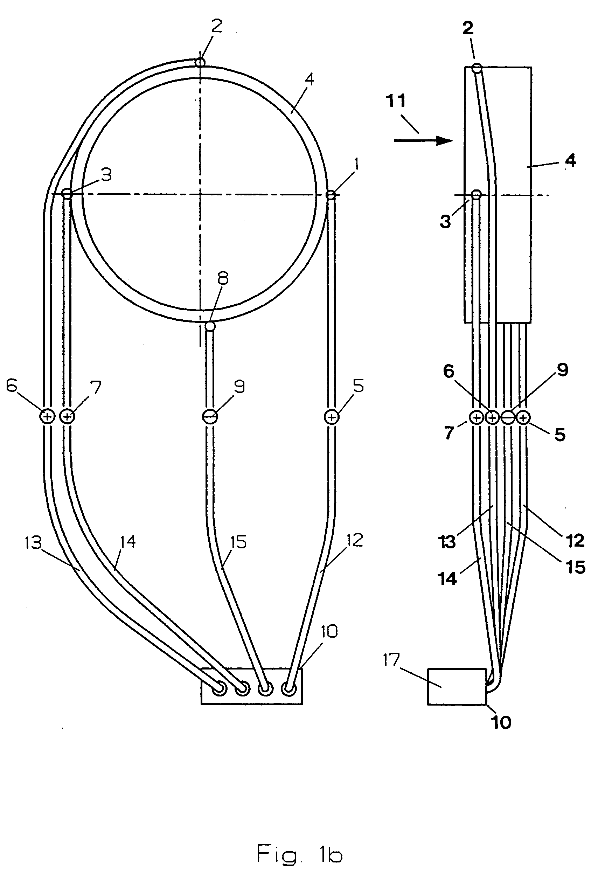

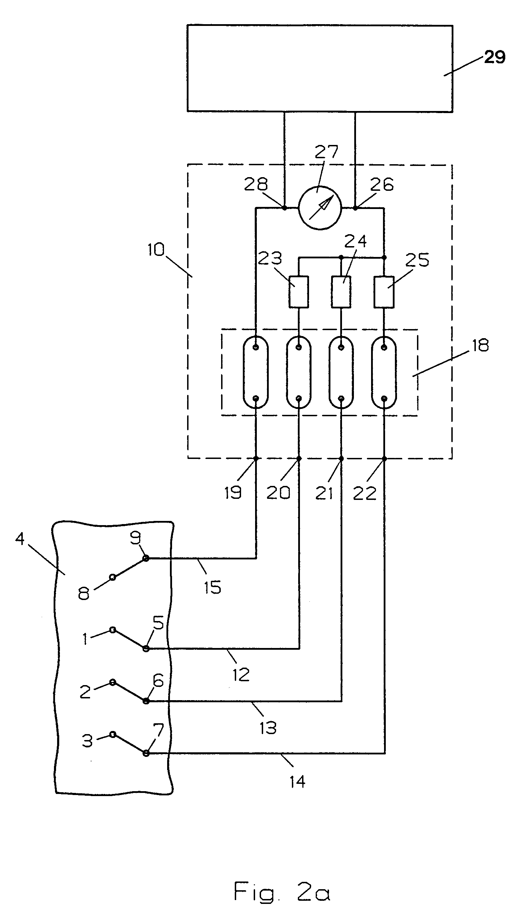

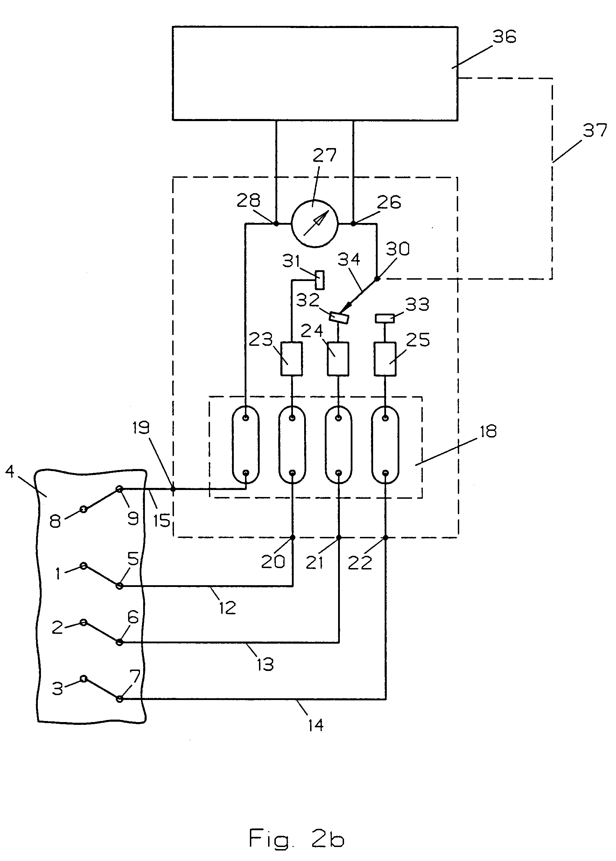

Im folgenden ist der Gegenstand anhand der Figuren 1a, 1b, 2a und 2b näher erläutert.
**Figur 1a** zeigt schematisch ein Ausführungsbeispiel eines rohrförmigen Trägerkörpers mit drei Thermoelementen zur Messung entlang der Strömungsrichtung eines Mediums;
**Figur 1b** zeigt schematisch in einer Draufsicht und einer Seitenansicht ein Ausführungsbeispiel eines rohrförmigen Trägerkörpers zur Messung radial bzw. senkrecht zur Strömungsrichtung.
**Figur 2a** zeigt schematisch eine Schaltungsanordnung zur Bestimmung der mittleren Abgastemperatur, beispielsweise in Haushaltsbrennern mit einem nur teilweise dargestellten Trägerkörper, welcher durchströmt wird;
**Figur 2b** zeigt schematisch eine Schaltungsanordnung mit einem nur teilweise dargestellten Trägerkörper zur Messung von einzelnen Temperaturwerten an verschiedenen Positionen.

Gemäß Figur 1a und 1b sind zur Messung der Temperatur an den Kontaktträger-Meßpunkten 1, 2 und 3 auf dem Umfang eines ringförmigen Trägerkörpers 4 drei Thermopaare gebildet, von denen der jeweils negative Partner durch den Trägerkörper 4 gebildet wird, während die positiven Partner durch auf den Positionen der Meßpunkte 1, 2 und 3 aufgeschweißte Schenkel des positiven Partners der Thermopaare gebildet werden. Die positiven Anschlüsse der Thermopaare sind mit den Ziffern 5, 6 und 7 bezeichnet, während der Trägerkörper 4 mit einem Leitungsanschluß 8 versehen ist, welcher ebenso wie die Leitungsanschlüsse 5, 6 und 7 über Anschluß 9 mit einer Temperatur-Meßeinrichtung 10 verbunden ist.

Beim praktischen Einsatz der Temperatur-Meßeinrichtung kann der ringförmige Trägerkörper beispielsweise als sogenannter Gasring ausgebildet sein, durch den heiße Gase strömen, die zur Erzielung eines erwünschten Wirkungsgrades eine Mindesttemperatur aufweisen sollen, jedoch eine Maximal-Temperatur nicht überschreiten sollen, um Schäden durch Überhitzung von dem Brenner-System abzuwenden; zu diesem Zweck strömt entlang der Pfeilrichtung 11 das zu temperierende Gas durch den ringförmig ausgebildeten Trägerkörper 4, während die am Außenumfang des Trägerkörpers an den Positionen 1, 2 und 3 ermittelten Thermospannungen über die Anschlüsse 5, 6 und 7 und 8, 9 mittels Leitungen 12, 13, 14 und 15 einer Meßvorrichtung 10 zugeführt werden, die mit einer Temperaturanzeige 17, bzw. hier nicht dargestellten Auswerte-Einheit versehen ist.

Während Figur 1a sich beispielsweise für Temperatur-Gradientenermittlung entlang der Strömungsrichtung eines Mediums eignet, ist die Vorrichtung gemäß Figur 1b auf die Temperatur-Mittelwertermittlung im Querschnitt der Strömungsrichtung bzw. im Querschnitt eines ruhenden Mediums gerichtet; in Figur 1b sind die Bezugsziffern der entsprechenden Komponenten aus Figur 1a übernommen.

Gemäß Figur 2a werden die Thermopaare im Bereich der Kontaktträger-Meßpunkte 1, 2 und 3 durch den Trägerkörper 4 als den einen Partner und durch durch den aufgebrachten Kontaktträger als den anderen Partner gebildet; die Kontaktträger-Meßpunkte 1, 2 und 3 sind jeweils über Leitungsanschlüsse 5, 6 und 7 und Kompensationsleitungen 12, 13, 14 mit den Eingängen 20, 21, 22 einer Temperatur-Meßeinrichtung 10 verbunden, die eine Vergleichsstelle 18 konstanter Temperatur aufweist; die Ausgänge der Vergleichsstelle 18 sind über Abgleichwiderstände 23, 24 und 25 mit einem Anschluß 26 eines Millivoltmeters 27 verbunden, dessen anderer Anschluß 28 über den Anschluß der Vergleichsstelle 18 und Vergleichsstelleneingang 19 mit der Ausgleichsleitung bzw. Kompensationsleitung 15 verbunden ist, die zum Leitungsanschluß 9 des negativen Partners 8 für alle Thermopaare führt, welcher durch den Kontaktträger 4 gebildet ist. In der Praxis ist Millivoltmeter 27 in Temperaturgraden geeicht, so daß eine direkte Temperaturanzeige möglich ist.

Es ist jedoch auch möglich, an die Anschlüsse 26 und 28 zusätzlich eine Auswerte-Einheit 29 anzuschließen, welche die eingehenden Temperaturdaten, beispielsweise einer Regelvorrichtung zuführt oder die Daten einem Temperaturschreiber zuführt.

Im Falle einer Temperaturregelung kann mit Hilfe der schematisch dargestellten Auswerte-Einheit 29 der gemessene Temperaturmittelwert mit einem vorgegebenen Temperatur-Sollwert verglichen und die Differenz als sogenannte Regelabweichung einem Regler zugeführt werden, wobei der Regler ein Stell-Signal für den Betrieb des hier nicht dargestellten Brenners abgibt, um die Regelabweichung auf Null zu korrigieren; weiterhin ist es möglich, einen Zeitplangeber zur Temperatur-Sollwert-Vorgabe einzusetzen.

Figur 2b entspricht in ihrem schaltungsmäßigen Aufbau im wesentlichen der anhand Figur 2a erläuterten Einrichtung, wobei die entsprechenden Bauelemente mit gleichen Bezugsziffern versehen sind; die am Ausgang der Vergleichsstelle 18 liegenden Ausgleichswiderstände 23, 24 und 25 sind nach Figur 2b jedoch nicht ausgangsseitig miteinander verbunden, sondern zu Kontakten 31, 32 und 33 einer Umschalt-Vorrichtung 30 geführt, welche über Umschaltzunge 34 jeweils einen Ausgleichswiderstand mit Anschluß 26 des Millivoltmeters 27 verbindet. Der andere Anschluß 28 ist entsprechend Figur 2a mit dem Trägerkörper 4 als negativem Partner des jeweiligen Thermopaares verbunden; nach Figur 2b ist somit möglich, durch Betätigung der Schaltzunge 34 die exakte Temperatur an den einzelnen Meßstellen 1, 2 und 3 des Kontaktträger 4 zu ermitteln.

Auch bei dieser Anordnung ist es möglich, die Anschlüsse 26, 28 mit einer Auswerte-Einheit 36 zu verbinden, die eine Auswertung der einzelnen gemessenen Temperaturen an den Meßpunkten 1, 2, 3 durch zusätzliche Umschaltungsmaßnahmen bewirkt; die von der Auswerteeinheit 36 ausgehende Umschaltmöglichkeit des Umschalters 30 ist schematisch durch die Verbindung 37 dargestellt.

In der Praxis ist es möglich, den hier mechanisch dargestellten Umschalter 30 durch eine elektronische Steuerlogik zu ersetzen.

Mit Hilfe der Auswerte-Einheit 36 ist es ebenfalls möglich, eine Regelung bzw. Zeitplan-Regelung des hier nicht dargestellten Brenners vorzunehmen und ggf. den Temperaturgradienten auszuwerten bzw. darzustellen.

Als Werkstoff für den Trägerkörper 4 wird eine Nickel-, bzw. Nickel-Silizium-Legierung eingesetzt, während die positiven Teile der Thermopaare an den Meßpunkten 1, 2, 3 jeweils aus NiCr bzw. NiCrSi bestehen; darüberhinaus ist es möglich, als Werkstoff des Trägerkörpers CuNi, Pt und PtRh 6 % einzusetzen und für die positiven Partner der Thermopaare Fe, Cu, PtRh 13, PtRh 10 % vorzusehen, PtRh 30 % (beispielsweise gemäß Norm IEC 584, Typen K, N, J, T, E, R, S, B) vorzusehen.

## Patentansprüche

1. Temperaturmeßeinrichtung nach dem thermoelektrischen Prinzip, wobei wenigstens ein Kontaktträger (1, 2, 3) als Partner eines Thermopaars mit einem ersten Leitungsanschluß (5, 6, 7) auf einem als Meßobjekt dienenden Trägerkörper (4) angeordnet ist, dadurch gekennzeichnet, daß wenigstens ein Thermospannung erzeugendes, elektrisch miteinander verbundenes Leiterpaar jeweils aus dem Werkstoff des Kontaktträgers (1, 2, 3) und dem Werkstoff des Trägerkörpers (4) gebildet ist, wobei der Trägerkörper (4) mit einem zweiten Leitungsanschluß (8) versehen ist und beide Leitungsanschlüsse zur Verbindung mit einer Temperatur-Meßvorrichtung (10) vorgesehen sind.

2. Temperaturmeßeinrichtung nach Anspruch 1, dadurch gekennzeichnet, daß wenigstens ein Kontaktträger (1, 2, 3) auf dem Trägerkörper (4) aufgeschweißt ist.

3. Temperaturmeßeinrichtung nach Anspruch 1 oder 2, dadurch gekennzeichnet, daß der Werkstoff des Trägerkörpers (4) als negativer Partner des Thermopaars ausgebildet ist.

4. Temperaturmeßeinrichtung nach Anspruch 3, dadurch gekennzeichnet, daß der Trägerkörper (4) aus einer Nickel-Basis-Legierung besteht.

5. Temperaturmeßeinrichtung nach Anspruch 4, dadurch gekennzeichnet, daß der Trägerkörper (4) aus Ni oder NiSi besteht.

6. Temperaturmeßeinrichtung nach Anspruch 4 oder 5, dadurch gekennzeichnet, daß ein als positiver Partner dienender Kontaktträger (1, 2, 3) aus NiCr oder NiCrSi besteht, wobei NiCr mit Nickel und NiCrSi mit NiSi jeweils ein Thermopaar bilden.

7. Temperaturmeßeinrichtung nach einem der Ansprüche 1 bis 6, dadurch gekennzeichnet, daß auf dem Trägerkörper (4) wenigstens zwei Verbindungsstellen im Bereich eines Temperaturgefälles zur Darstellung eines Temperaturgradienten angeordnet sind.

8. Temperaturmeßeinrichtung nach einem der Ansprüche 1 bis 6, dadurch gekennzeichnet, daß wenigstens zwei Verbindungsstellen zur Bildung eines Temperatur-Mittelwertes parallel geschaltet sind.

9. Temperaturmeßeinrichtung nach Anspruch 8, dadurch gekennzeichnet, daß die Temperatureinrichtung (10) mit einer Auswerte-Einheit (29) verbunden ist, die den Temperatur-Mittelwert als Regelgröße mit einem vorgegebenen Temperatur-Sollwert vergleicht und bei Regelabweichung ein Stellsignal zum Betrieb eines Brenners abgibt.

10. Temperaturmeßeinrichtung nach Anspruch 9, dadurch gekennzeichnet, daß die Auswerte-Einheit (29) einen Zeitplangeber zur Temperatur-Sollwert-Vorgabe aufweist.
